Europäisches Patentamt

(19) European Patent Office

Office européen des brevets

(11) Publication number : **0 526 143 A2**

(12) **EUROPEAN PATENT APPLICATION**

(21) Application number : 92306835.7

(22) Date of filing : 27.07.92

(51) Int. Cl.⁵ : **H02K 7/11, H02K 5/10**

(30) Priority : **30.07.91 JP 189085/91**

(43) Date of publication of application :
**03.02.93 Bulletin 93/05**

(84) Designated Contracting States :
**DE FR GB IT**

(71) Applicant : **MABUCHI MOTOR KABUSHIKI KAISHA**
**No. 430, Matsuhidai**
**Matsudo-shi, Chiba-ken (JP)**

(72) Inventor : **Shibuya, Isao**
**Mabuchi Motor Kabushiki Kaisha, No. 430**
**Matsuhidai**
**Matsudo-shi, Chiba-ken (JP)**
Inventor : **Yoshimura, Kazutoshi**
**Mabuchi Motor Kabushiki Kaisha, No. 430**
**Matsuhidai**
**Matsudo-shi, Chiba-ken (JP)**
Inventor : **Hagiwara, Kenji**
**Mabuchi Motor Kabushiki Kaisha, No. 430**
**Matsuhidai**
**Matsudo-shi, Chiba-ken (JP)**
Inventor : **Tsuyama, Kenji**
**Mabuchi Motor Kabushiki Kaisha, No. 430**
**Matsuhidai**
**Matsudo-shi, Chiba-ken (JP)**

(74) Representative : **Hitchcock, Esmond Antony**
**Lloyd Wise, Tregear & Co. Norman House**
**105-109 Strand**
**London WC2R 0AE (GB)**

(54) **A miniature D-C motor.**

(57) The functional components of a miniature direct current electric motor are confined in a hermetically sealed housing (1,13) and drive an output shaft (19) mounted externally of the housing via a magnetic coupling (22). The sealed housing can be formed by the motor case (1) and case cap (6). Alternatively, the case and cap with a motor rotor projecting therefrom can be confined in a separate housing (13). In the former arrangement, one part (24) of the magnetic coupling (22) is within the motor case (1). In the latter, it may be external of the case (1), but within the housing (13).

F I G. 2

EP 0 526 143 A2

This invention relates to miniature d-c motors of the type used for example in audio equipment and precision equipment. It is especially concerned with the maintenance of uniform performance characteristics in the working life of the motors

Known miniature motor constructions have bearings mounted in opposite external faces of the motor body, usually in the closed end of a tubular motor case and in a case cap closing the opposite open end, for supporting the motor rotor shaft. These bearings, and particularly that at the output end of the shaft which projects therethrough, cannot be effectively completely sealed against the passage of air. Thus, air can enter or escape from the interior of the case, at least at the output end of the shaft, through either the bearing itself, or the gap between the shaft and the bearing. As a consequence, harmful gases can contact functional components of the motor. This will have a deleterious effect on the performance of the motor, as is explained more fully hereinafter.

The present invention seeks to design a miniature d-c electric motor unit in which the functional components of the motor are effectively isolated from the atmosphere in which the motor is disposed. Such a unit comprises a cylindrical motor case closed at one end and having a permanent magnet fitted to the inner surface thereof; a case cap fitted at the other, open end of the case; bearings mounted on the case and the end cap supporting a rotor having an armature and a commutator; and input terminals connected to brushes making sliding contact with the commutator. According to the invention, the functional components of the motor, and particularly the bearings for the motor rotor are confined in a hermetically sealed housing and drive an output shaft mounted externally of the housing via a magnetic coupling. The sealed housing can be formed by the motor case and case cap. Alternatively, the case and cap with a motor rotor projecting therefrom can be confined in a separate housing. In the former arrangement, one part of the magnetic coupling is within the motor case. In the latter, it may be external of the case, but within the housing.

With the atmosphere within the motor case being isolated from the ambient air, it may be selectively controlled. For example, a substantially inert atmosphere may be created, or at least a deoxidizing element may be disposed in the housing. A moisture-conditioning element might also be used, either alone or in combination with other features. By isolating, and controlling the humidity and/or the oxygen concentration within the housing, and particularly the motor case, the motor can provide more stable and reliable performance than was available from previous comparable motors. The mere isolation of the motor components protects them from harmful gases which might provoke friction between moving parts; discharges at the junction between the brushes and the commutator and indirectly, overheating.

The invention will now be described by way of example and with reference to the accompanying drawings wherein:

Figure 1 is a longitudinal part-sectioned view illustrating a known d-c motor construction;

Figure 2 is a longitudinal section illustrating a first embodiment of this invention;

Figures 3 and 4 are diagrams illustrating typical oscillograph waveforms of currents flowing in a miniature d-c motor embodying this invention and a prior known miniature d-c motor respectively;

Figures 5 to 8 are longitudinal sections illustrating motors according to four further embodiments of this invention.

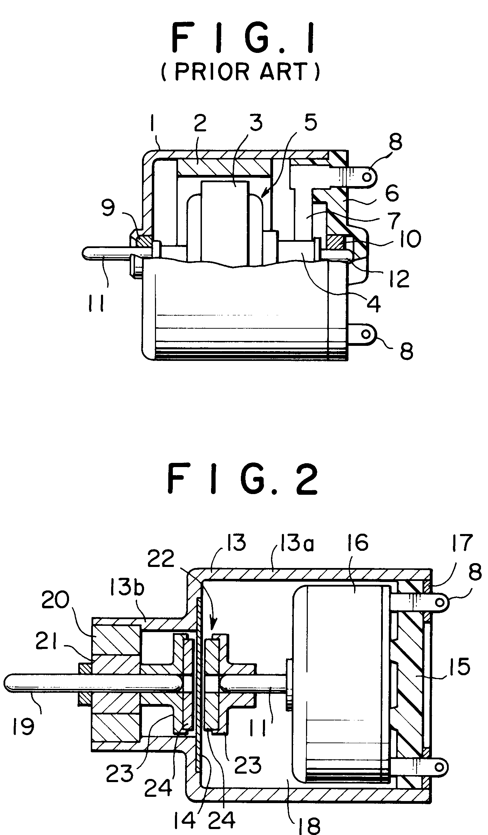

The miniature d-c motor shown in Figure 1 has a case 1 made of a metallic material, such as mild steel, formed into a bottomed hollow cylindrical shape. On its inner circumferential surface a permanent magnet 2 formed into an arc segment shape, for example, is fitted. A rotor 5 consisting of shafts 11, 12, an armature 3 facing the permanent magnet 2, and a commutator 4 are mounted in bearings 9, 10, of which one is fitted to a case cap 6 made of a synthetic resin or other insulating material, and engaged with the open end of the case 1. Brush arms 7 adapted to make sliding contact with the commutator 4, are fitted to the case cap 6, and connected to input terminals 8 which project from the cap for coupling to a d-c electrical supply.

In a miniature d-c motor having the above construction, the space defined by the case 1 and the case cap 6 cannot be completely isolated to prevent the entrance of escape of the ambient atmosphere outside the motor due to the permeability of at least the bearing 9. Motor components could therefore be oxidized by spark discharge and joule heat produced between the brushes (not shown) at the tips of the brush arms 7 and the commutator 4. Oxidation of motor components may lead to increased contact resistance at the sliding contacts, further accelerating the damage caused by spark discharge, aggravating the war of the brushes and the commutator, and significantly reducing the life of the motor.

Most miniature motors of the conventional type employ sintered oil-impregnated bearings or ball bearings as the bearings 9 and 10 supporting the shafts 11 and 12. Consequently, the bearing 9 itself, or the gap between shaft 11 and the bearing 9 on the output side cannot be sealed completely against the air, although the bearing 10 in the case-cap 6 can be enclosed as shown.

Because of the relatively free passage of air to and from the space within the case 1, the space cannot be kept clean. Particularly when used in environments containing corrosive gases or organic vapours, chemical reactions with component materials can take place in the presence of spark discharge or heat, producing a blackened substance as a mixture of reaction products and fine chips produced by the wear of the commutator and brushes. Due to its insulating properties, this blackened substance tends to cause unstable contact between the commutator 4 and the brushes, increasing the contact resistance between them. The performance of the motor correspondingly deteriorates.

In the first embodiment of the invention shown in Figure 2, a hermetic case 13 of a non-magnetic material, such as aluminium or a synthetic resin is formed into a hollow cylindrical shape with a large-diameter part 13a and a small-diameter part 13b. A partitioning plate 14 made of aluminium, for example, is fitted substantially at the boundary therebetween to form an airtight seal. The partitioning plate 14 may be formed integrally with the hermetic case 13. A hermetic cap 15 formed of an insulating material is fitted to the open end of the large-diameter part 13a, and a miniature d-c motor 16 of such a construction as is shown in Figure 1, fitted to the hermetic cap 15 with the input terminals thereof projecting through the cap 15 and on the outside. An adhesive 17 is applied to the joint of the hermetic case 13 and the hermetic cap 15 and to the areas around the input terminals 8. In this way, a sealed internal space 18 defined by the hermetic case 13 and the hermetic cap 15 is created in which the motor 16 can operate in an isolated environment.

An output shaft 19 is mounted in the small-diameter part 13b of the hermetic case 13, by means of a bearing 21 such as a sintered oil-impregnated bearing, and a bearing holder 20, and aligned with the shaft 11 of the miniature d-c motor 16. The output shaft 19 is connected to the shaft 11 by a magnetic coupling 22 in such a manner that power is electromagnetically transmitted from the shaft 11 to the output shaft 19. The coupling 22 comprises holders 23 each fitted to the shafts 11 and 19, and disc-shaped permanent magnets 24 each fitted to the respective end faces of the holders 23 such as to face each other on opposite sides of the partitioning plate 14. Each permanent magnet 24 may be magnetized in such a manner that a plurality of N and S magnetic poles are disposed alternately at the circumference, or may have a plurality of magnet pieces formed into blocks in such a fashion that N and S magnetic poles are so disposed.

When the input terminals 8 of the motor unit of Figure 2 are connected to a d-c power supply (not shown), the miniature d-c motor 16 begins operating, causing the shaft 11 to rotate, which in turn drives the magnetic coupling 22 and the output shaft 19. since the space 18 in which the miniature d-c motor 16 is housed is hermetically sealed from the air outside the motor, ambient gases and vapours are excluded, even when the unit is used in environments containing corrosive gases or organic vapours. As a result, the motor 16 does not experience such deterioration of functions as are encountered with the motor of Figure 1, and can provide stable performance over a long period.

The results of some sulphur adhesion tests and organic-vapour atmosphere tests will now be described. In the sulphur adhesion tests, miniature d-c motors were placed in a thermostat oven held at 80°C, together with sulphur powder, and operated continuously for 48 hours. After that, the sulphur deposited on components within the miniature d-c motors was subject to an EPMA qualitative analysis. The test results revealed that a large quantity of sulphur was detected on the miniature d-c motors of the type as shown in Figure 1, while no sulphur was observed on a motor of the type shown in Figure 2.

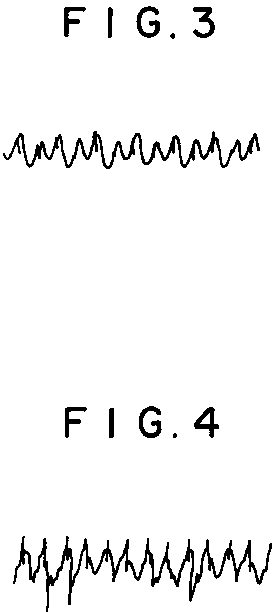

In the organic-vapour atmosphere tests, ethylene glycol was charged in a thermostat oven held at 50°C, and miniature d-c motors were operated in this atmosphere for 100 hours to measure current waveforms flowing in the motors. Figures 3 and 4 show examples of current waveforms appearing on an oscillograph; Figure 3 showing the current waveform obtained with a miniature motor embodying this invention, and Figure 4 that obtained with the miniature d-c motor of prior known type. As is evident from these figures, the current waveform of the known motor is very irregular, indicating that the motor properties had significantly deteriorated. The motor of this invention however, had an extremely good current waveform, indicating no substantial deterioration even when operated in an organic-vapour environment.

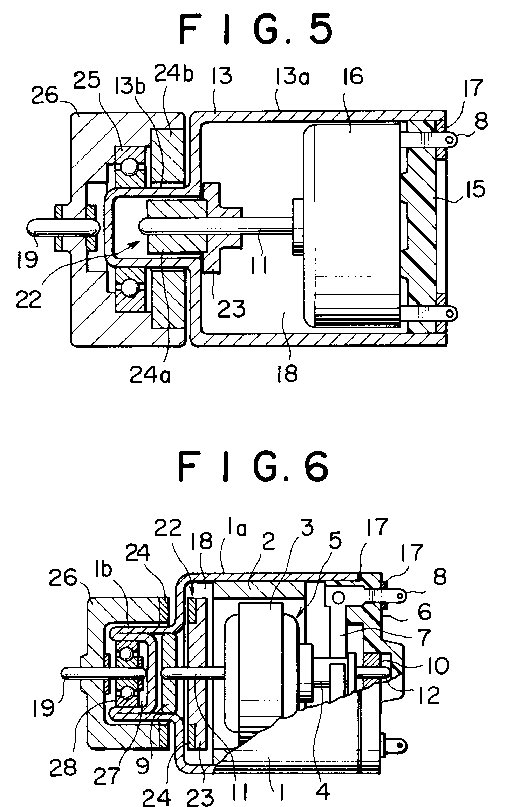

A second embodiment of this invention is shown in Figure 5. A permanent magnet 24a as a component of a magnetic coupling 22 is fitted to the shaft 11 via a holder 23, and formed into a cylindrical shape in such a fashion that a plurality of N and S magnetic poles appear alternately on the outer circumferential surface thereof. The permanent magnet 24a is mounted on the end of the shaft 11 which extends into the small-diameter part 13b of the case 13. Another permanent magnet 24b is provided on an open end of a holder 26 formed into a cup shape, rotatably fitted via a bearing 25 on the small-diameter part 13b. The magnet 24b is also formed into a hollow cylindrical shape but in such a manner that a plurality of N and S magnetic poles appear alternately on the inner circumferential surface thereof, facing the permanent magnet 24a. The output shaft 19 is provided concentrically with the shaft 11 on the outside end face of the holder 26.

The motor unit shown in Figure 5 operates in a similar manner to that of Figure 2. However, in this case the sealed space 18 is defined by the entire case 13 and the cap 15, rather than just the large diameter part 13a.

In the third embodiment of Figure 6, the sealed space 18 is provided within the motor case 1. The case 1 consists of a large-diameter portion 1a and a small-diameter portion 1b. The small-diameter portion 1b is formed into an enclosed construction having a recess 27 at the outer end thereof, and a bearing 28 being provided in the recess 27 to rotatably support an output shaft 19 and a holder 26. An adhesive 17 is applied to the joint between a case cap 6 and the open end of the large-diameter portion 1a to hermetically seal the space defined by the case 1 and the case cap 6. An annular permanent magnet 24 is provided on the shaft 11 via a holder 23. Another annular permanent magnet 24 is fixedly fitted to an open end of the holder 26. The juxtaposed planar faces of the magnets 24 are magnetized in such a fashion that a plurality of N and S magnetic poles are disposed alternately in the circumferential direction. Alternatively, they may each be formed by arranging a plurality of magnet pieces in such a manner that N and S magnetic poles are disposed alternately in the circumferential direction.

The operation of the unit shown in Figure 6 is substantially similar to that of the first and second embodiments of this invention described above. However, in this variant the outer case 13 and cap 15 are not required, making the entire motor unit compact and small in size.

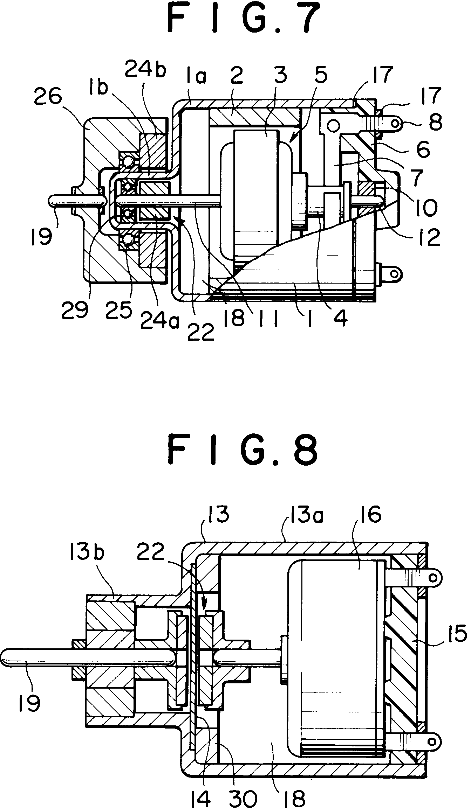

The fourth embodiment of the invention shown in Figure 7 also uses the motor case 1 to define the sealed space 18. In this unit though, a bearing 29 for the motor output shaft is located in the small-diameter portion 1b. The permanent magnet 24a comprising the magnetic coupling 22 is formed into a hollow cylindrical shape, fitted directly to the shaft 11, and disposed in such a manner as to face the hollow cylindrical permanent magnet 24b. Other features of construction, and the operation of the unit are similar to those of the embodiments shown in Figures 5 and 6.

Similar sulphur adhesion tests and organic-vapour atmosphere tests to those conducted with the first embodiment were conducted with the second to fourth embodiments. The test results showed that the same favourable performance characteristics as those achieved with the first embodiment can be obtained.

A fifth embodiment of the invention is shown in Figure 8. The unit shown is similar to that of Figure 2, but for the inclusion of a functional member 30 formed into a hollow cylindrical shape, for example, provided in the internal space 18. In this embodiment, the functional member 30 is pure iron powder, for example, encapsulated in a gas-permeable filter or paper, or formed into an annulus by mixing with binder such as a resin. It is fitted at a location where no interference is caused with motor functions in the internal space 18 by using an adhesive or press-fitting, or another suitable technique.

The member 30 comprising iron powder allows oxygen in the air within the internal space 18 to be absorbed by the chemical reaction: $4Fe + 3O_2 \rightarrow 2Fe_2O_3$ substantially reducing oxygen concentration in the internal space 18, or even leading to an oxygen-free atmosphere. Thus, the oxidation of component members due to spark discharge between the brushes and commutator (both not shown) comprising the miniature d-c motor 16, and/or joule heat can be reduced or even substantially prevented.

Table 1 shows the results of life tests conducted on miniature d-c motors manufactured to the same specification.

## Table 1

| Classification | No. | Elapsed time to irregular stop or normal stop (Hrs) | Average life (Hrs) |
|---|---|---|---|
| Conventional | 1<br>2<br>3<br>4<br>5 | 195 to irregular stop<br>70 to irregular stop<br>190 to irregular stop<br>108 to irregular stop<br>107 to irregular stop | 134 |
| This invention | 6<br>7<br>8<br>9<br>10 | 311 to irregular stop<br>336 to irregular stop<br>380 to normal stop<br>340 to irregular stop<br>380 to normal stop | 350 |

As is evident from Table 1, the conventional miniature d-c motors of Nos. 1 through 5, in which the oxidation of component materials proceeded due to the presence of air within the motor, have an average life of only 134 hours. On the other hand, the miniature d-c motors of this invention of Nos. 6 through 10, in the internal space 18 of which a functional member having a deoxidizing function was fitted, as shown in Figure 8, have an increased average life of 350 hours. This is attributable to the fact that oxygen concentration in the internal space 18 was reduced substantially, preventing the oxidation of motor components. Note that the term "irregular stop" used in Table 1 means the stop of the motor rotating shaft due to the wear of component materials, whereas the term "normal stop" means the discontinuation of tests in a state where the motor rotation remains normal.

The above description refers only to the use of pure iron powder in the functional member 30. However, other elements such as Al, B, C, Cr, Mn, Si, Ti, V, Zr or their compounds or mixtures thereof may be used so long as an affinity to oxygen in the air is preserved. The shape of the functional member 30 may be selected appropriately so long as it can be placed in the internal space 18 and does not adversely affect the operation of the motor.

Some tests were conducted on a motor unit of the type illustrated in Figure 2, but with the air in the space 18 replaced with nitrogen gas of a high purity (over 99.9%) or carbon-dioxide gas. The results of life tests conducted on the miniature d-c motors having this construction are shown in Table 2. The test results on the miniature d-c motors of the conventional type having the same specification as shown in Figure 2 are also given in the table. The term "irregular stop" used in Table 2 has the same meaning as it does in Table 1.

## Table 2

| Classification | No. | Atmosphere | Elapsed time to irregular stop (Hrs) | Average life (Hrs) |
|---|---|---|---|---|
| Conventional | 1 | Air | 321 | 334 |
| | 2 | | 379 | |
| | 3 | | 332 | |
| | 4 | | 305 | |
| This invention | 5 | Nitrogen gas | 1104 | 1197 |
| | 6 | | 1139 | |
| | 7 | | 1339 | |
| | 8 | | 1206 | |
| | 9 | Carbon dioxide | 2050 | 2022 |
| | 10 | | 1870 | |
| | 11 | | 2100 | |
| | 12 | | 2067 | |

As is shown in Table 2, the conventional-type miniature d-c motors of Nos. 1-4, in which the oxidation of component materials proceeded due to the presence of air in the motor, has an average life of only 334 hours. The average life of the miniature d-c motors of this invention (Nos. 5-12), on the other hand, in which the air in the internal space 18 shown in Figure 2 was replaced with nitrogen gas or carbon dioxide gas to produce an inert-gas atmosphere, is greater by a factor of three to five times. This is attributable to the fact that the oxidation of motor component materials is substantially prevented due to the inert-gas atmosphere present in the internal space 18. In addition to the gases used in this embodiment, others such as helium and argon may be used to achieve an inert atmosphere.

In variants of the embodiment of the invention described with reference to Figure 8, silica gel, zeolite, cotton or any other material having a moisture-conditioning function is used in the functional member 30. Additionally, the air inside the internal space 18 is replaced with nitrogen of a high purity (over 99.9%). The results of life tests conducted on four miniature d-c motors assembled in this way revealed that the motors can continue operation even after 5800 hours of test. The specification of the miniature d-c motor 16 of this embodiment is the same as that shown in Figure 2. It follows from this that the average life of the miniature d-c motor unit of these variants will be more than ten times that of the known miniature motor, and more than five times as long as that of the motors of Nos. 5-8 in Table 2. This is attributable to the fact that the functional member 30 having a moisture-conditioning function keeps relative humidity at 40 - 80% within the temperature range of 20 - 60°C in the space 18, with the result that lubrication between motor components is additionally facilitated due to the adsorption of the monomolecular film of water. The same effect can be expected when the inert gas is replaced by carbon dioxide, helium gas, argon gas, etc. other than nitrogen.

The operations and effects expected by replacing the air inside the internal space with an inert atmosphere have been described with particular reference to Figures 2 and 8. Similar operations and effects can be expected with the motor units shown in Figures 5 to 7.

## Claims

1. A miniature direct current motor unit comprising a cylindrical motor case (1) closed at one end and having a permanent magnet (2) fitted to the inner surface thereof; a case cap (6) fitted at the other, open end of the case (1); bearings (9,10,29) mounted on the case and the end cap supporting a rotor (5) having an armature (3) and a commutator (4); and input terminals (8) connected to brushes (7) making sliding contact with the commutator (4),
CHARACTERISED IN THAT
the bearings (9,10,29) are disposed within a hermetically sealed housing formed by the motor case (1) and case cap (6), in which the rotor (5) rotates,
AND IN THAT
an output shaft (19) is mounted externally of the housing and connected to the motor rotor (5) by means of a magnetic coupling (22).

2. A miniature direct current motor unit comprising a cylindrical motor case (1) closed at one end and having a permanent magnet (2) fitted to the inner surface thereof; a case cap (6) fitted at the other, open end of the case; bearings (9,10,29) mounted on the case and the end cap supporting a rotor (5) having an armature (3) and a commutator (4); and input terminals (8) connected to brushes (7) making sliding contact with the commutator (4),
CHARACTERISED IN THAT
the motor case (1) and end cap (6) are disposed within a hermetically sealed housing (13) having external connections electrically coupled to the input terminals (8),
AND IN THAT
an output shaft (19) is mounted externally of the housing (13) and connected to the motor rotor (5) by means of a magnetic coupling (22).

3. A miniature motor unit according to Claim 1 or Claim 2 wherein the input terminals (8) and brushes (7) are mounted in the case cap.

4. A miniature motor unit according to any preceding Claim wherein a deoxidizing element (30) is disposed in the housing.

5. A miniature motor according to any of Claims 1 to 3 wherein an inert atmosphere is formed in the housing.

6. A miniature motor according to any preceding Claim wherein a moisture-conditioning element (30) is disposed in the housing.

# F I G. I
## ( PRIOR ART )

# F I G. 2

# F I G . 3

# F I G . 4

# F I G. 5

# F I G. 6

# F I G. 7

# F I G. 8